(19) **Europäisches Patentamt / European Patent Office / Office européen des brevets**

(11) **EP 3 405 988 B1**

(12) **EUROPEAN PATENT SPECIFICATION**

(45) Date of publication and mention of the grant of the patent:
**25.09.2019 Bulletin 2019/39**

(21) Application number: **17701048.5**

(22) Date of filing: **10.01.2017**

(51) Int Cl.:
*H01M 4/485* (2010.01)  *H01M 4/505* (2010.01)
*H01M 4/525* (2010.01)  *H01M 10/0525* (2010.01)

(86) International application number:
**PCT/EP2017/050370**

(87) International publication number:
**WO 2017/125279 (27.07.2017 Gazette 2017/30)**

(54) **SODIUM ION BATTERY MATERIALS**

NATRIUMIONENBATTERIEMATERIALIEN

MATÉRIAUX D'ACCUMULATEUR SODIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2016 DK 201600032**

(43) Date of publication of application:
**28.11.2018 Bulletin 2018/48**

(73) Proprietor: **Haldor Topsøe A/S**
**2800 Kgs. Lyngby (DK)**

(72) Inventors:
• **DAHL, Søren**
  **3400 Hillerød (DK)**

• **WONSYLD, Karen**
  **2830 Virum (DK)**
• **SØNDERGAARD, Martin**
  **2300 Copenhagen (DK)**

(74) Representative: **Haldor Topsøe A/S**
**Haldor Topsøes Allé 1**
**2800 Kgs. Lyngby (DK)**

(56) References cited:
**EP-A2- 2 437 342**  **WO-A1-2015/035138**
**WO-A1-2015/177568**  **WO-A2-2013/048597**
**US-A1- 2007 218 361**  **US-A1- 2012 183 837**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Among current commercially available secondary battery cathode materials are layered lithium ion metal oxide battery materials, for example $LiCoO_2$. No sodium secondary battery materials are commercially available to date. In comparison to lithium ion materials, sodium ion materials are commercially favorable due to the greater abundance of sodium as a raw material than lithium and the advantages resulting from the size of the sodium ion, e.g. increased flexibility of materials design and weak solvation energy: Chem. Rev. (2014) 114, pp 11636-11682.

The desirable properties of secondary battery materials include high energy density, high capacity and high stability.

High energy density sodium ion secondary battery materials with a layered oxide structure may be P2-type and/or 03-type structures, as disclosed in (Chem. Rev. (2014) 114, pp 11636-11682). P2-type structure corresponds to trigonal prismatic coordination of sodium ions between metal oxide layers, while an 03-type structure corresponds to octahedral coordination of sodium between metal oxides layers.

For sodium ion layered oxide materials with a P2-type structure and a formula of $Na_xTMO_2$ (TM = transition metal), e.g. $Na_{0.66}Ni_{0.5}Mn_{0.5}O_2$, a high capacity of 160 mAhg$^{-1}$ between 2.0 - 4.5 V in sodium cells is observed; Chem. Mater. (2014) 26, pp 1260-1269. However, at least one or more phase transformations occurs upon electrochemical cycling between 2.0 - 4.5 V in sodium cells, which greatly shortens the cycle life (stability) and reduces the rate capabilities of the material. Higher operating voltages are desirable (i.e. greater than 3.7 V in a sodium cell, where metallic sodium is used as the anode) as they result in higher energy density, enabling the use of the materials for energy storage in e.g. portable electronics, electrified vehicles, and stationary applications including electrical grid storage technologies.

Further examples of capacity and stability properties of P2-type materials during electrochemical cycling at higher voltages include $P2-Na_{0.66}Fe_{0.33}Mn_{0.66}O_2$ and $P2-Na_{0.66}Fe_{0.6}Mn_{0.5}O_2$, as disclosed in J. Power Sources (2014) 264, pp 235-239. $P2-Na_{0.66}Fe_{0.33}Mn_{0.66}O_2$ has a high capacity of 193 mAhg$^{-1}$ cycled between 1.5 - 4.3 V in a sodium cell, but a poor stability of 79% retention of the capacity after 40 cycles. A larger substitution of Mn with Fe provides $P2-Na_{0.66}Fe_{0.5}Mn_{0.5}O_2$ with a comparable, high capacity of 190 mAhg$^{-1}$ and a poorer stability of 79% capacity retention after 30 cycles in the same voltage window.

In order to improve the stability of the P2-type materials, the substitution of sodium with lithium into the P2-type structure of $P2-Na_{0.66}Ni_{0.33}Mn_{0.66}O_2$ has been investigated. The substitution results in a delay to the phase transformation of the P2 to an 02-type structure, and therefore an improvement of the stability and rate capabilities of the structure. $P2-Na_{0.80}[Li_{0.12}Ni_{0.22}Mn_{0.66}]O_2$ has a good capacity of 115 mAhg$^{-1}$ and a smooth voltage profile between 2.0 - 4.4 V in a sodium cell, resulting in a good stability illustrated by a 91% capacity retention after 50 cycles. Chem. Mater. (2014) 26, pp 1260-1269.

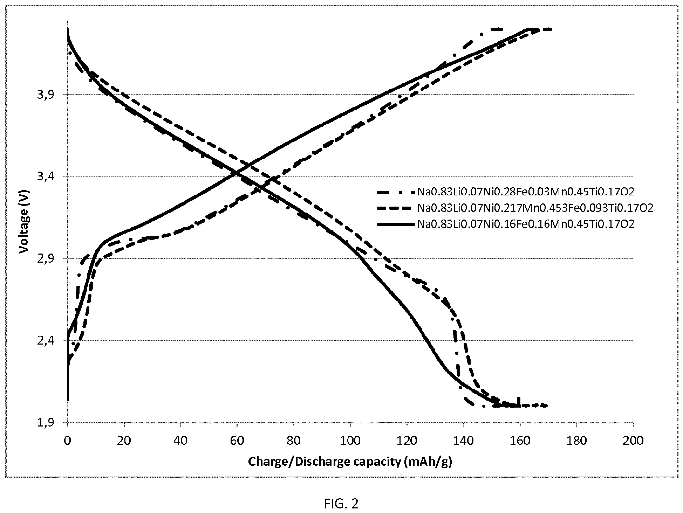

In order to improve the stability of P2-type materials, transition metals of $Na_{0.66}Ni_{0.5}Mn_{0.5}O_2$ may also be substituted with titanium; Chem. Comm. (2014) 50, pp 3677-3680 discloses the addition of titanium into $P2-Nao.66Ni_{0.33}Mn_{0.66}O_2$. The partial substitution of manganese with titanium provides $Na_{0.66}Ni_{0.33}Mn_{0.5}Ti_{0.17}O_2$. This material has a lower specific capacity of 127 mAhg$^{-1}$ cycled between 2.5-4.5 V with 3.7 V of average discharge voltage in sodium cells, and greater capacity retention of 94% after 10 cycles, in comparison to a capacity of ca. 150 mAhg$^{-1}$ and 67% capacity retention for the unsubstituted material. However, Fig. 2(b) of the article illustrates that a phase transformation occurs at voltages greater than 3.7 V in sodium cells for materials comprising 1/6 titanium, consequently reducing stability.

As observed in the above references, for both $P2-Nao.66Ni_{0.33}Mn_{0.66}O_2$ and $P2-Na_{0.66}Ni_{0.5}Mn_{0.5}O_2$ an improvement in the stability of the material is observed, i.e. by substituting sodium with lithium, or a transition metal with titanium; however, a concomitant reduction in the capacity is also observed. Therefore, there is a need to develop the materials in order to retain the capacity of the material whilst improving the stability.

Sodium ion layered metal oxide materials may also have an 03-type structure. Such materials include: $NaNi_{0.25}Fe_{0.5}Mn_{0.25}O_2$, the specific capacity is 140 mAhg$^{-1}$ and has a good stability of 90.4 % retention over 50 cycles (Nano Lett (2014) 14, pp 1620-1626). In an attempt to improve the stability of the material as observed with the P2-type structures, sodium has been substituted with lithium. Chem. Mater. (2014) 26, pp 6165-6171 discloses an 03-type material of $Na[Li_{0.05}(Ni_{0.25}Fe_{0.5}Mn_{0.25})_{0.95}]O_2$. The material has a high capacity of 130.9 mAhg$^{-1}$ at 1 C rate. However, a poor stability of 76% capacity retention at 0.5 C rate over 200 cycles with a hard carbon anode is observed. The 'C rate' is a measure of the rate at which a battery is discharged relative to its maximum capacity. A 1C rate means that the discharge current will discharge the entire battery in 1 hour.

03-type structure materials are also known to undergo one or more phase transformation to the P3-type structure upon electrochemical cycling, consequently reducing the stability of the material. In order to improve both the stability and capacity of the 03-type and P2-type materials, layered P2/03 intergrowth cathode materials (materials comprising both P2-type and 03-type phases) have been developed. Adv. Energy Mater. (2014) 4, 1400458 discloses a layered P2/03 intergrowth material of $Na_{0.7}Li_{0.3}Ni_{0.5}Mn_{0.5}O_{2+d}$. Electrochemical cycling results in a phase transformation of the 03-type structure to various 03-type structures and a P3-type structure. The material does not return to the 03-type structure; rather, it is locked into the P3-type structure by the P2-type layer. This provides a capacity of approximately 125 mAhg$^{-1}$ and an increased stability of ca. 95% capacity retention after 10 cycles. However, the P2-type structure must be present in order to lock the P3-type structure layer in place; a mixed phase material is therefore required.

It is an object of the present invention to provide high energy sodium ion secondary battery materials with a layered oxide structure that demonstrates a high capacity (at least 100 mAhg$^{-1}$) and stability (at least 95% capacity retention after 100 cycles). It is also an object of the invention to provide high energy sodium ion secondary battery materials having physical characteristics that are comparable to, and competitive with, commercially available lithium ion secondary battery materials. It is a further object to provide a cost effective battery material which requires that expensive metals and less abundant substrates, such as lithium and nickel, are present in the smallest amount possible.

Such sodium ion secondary battery materials comprise the general formula $Na_aLi_bNi_cMn_dFe_eTi_fO_g$ wherein

$0.70 < a < 1.0$
$0.01 \leq b < 0.2$
$0.10 < c < 0.37$
$0.20 < d < 0.5$
$0.00 \leq e < 0.3$
$0.10 < f < 0.2$
$1.85 \leq g \leq 2.2$

$$\frac{c+d+e+f}{g} < 2$$

wherein and wherein the capacity of the material decreases by 20% or less after 100 cycles between 2.0 and 4.3 V in a sodium cell. In addition to achieving one or more of the objects above, substitution of nickel and manganese with metals such as iron reduces the environmental impact of the process of preparing the materials. When the formula $\frac{c+d+e+f}{g} < 2$ is satisfied, lithium will be present in part of the transition metal layer of the layered structure. This provides for high capacity and high stability of the material.

The capacity of the material decreases by 20% or less, 17% or less, 16% or less, 12% or less, 10% or less after 100 cycles. Preferably, the capacity of the material decreases by 5.0% or less after 100 cycles. The capacity of the material decreases by 20% or less, 17% or less, 16% or less, 12% or less, 5% or less after 200 cycles.

An aspect of the invention is that the specific capacity of the material is equal to or greater than 100 mAhg$^{-1}$. The specific capacity of the material is equal to or greater than 110 mAhg$^{-1}$, is equal to or greater than 120 mAhg$^{-1}$, is equal to or greater than 130 mAhg$^{-1}$, is equal to or greater than 140 mAhg$^{-1}$.

In an embodiment of the invention the material comprises 70 % or more 03-type structure, the material comprises 75 % or more 03-type structure, the material comprises 80 % or more 03-type structure, the material comprises 85 % or more 03-type structure, the material comprises 90 % or more 03-type structure, the material comprises 95 % or more 03-type structure.

An embodiment of the invention is the material comprises 85 % or more P2-type structure, the material comprises 90 % or more P2-type structure, the material comprises 95 % or more P2-type structure.

It should be noted that the terms "P2-type structure", "P2-type phase" and "P2 phase" are seen as synonyms. Similarly, the terms "03-type structure", "03-type phase" and "O3 phase" are seen as synonyms.

An embodiment of the invention is compounds comprising the formula $Na_aLi_bNi_cMn_dFe_eTi_fO_g$ selected from the group consisting of $Na_{0.83}Li_{0.07}Ni_{0.31}Mn_{0.45}Ti_{0.17}O_2$ and $Na_{0.83}Li_{0.07}Ni_{0.29}Mn_{0.41}Ti_{0.17}O_{1.9}$.

An embodiment of the invention is compounds comprising the formula $Na_aLi_bNi_cMn_dFe_eTi_fO_g$ wherein g is from 1.85 to 2.2, about 2 or is 2. It should be noted that although the formula of the invention provides exact values of the elements within the composition, due to practical (experimental) limitations and the location of the elements in either the metal oxide layer or between the metal oxide layers, slight variations may occur. The relative stoichiometries and phase type or structure type are additional characteristics of the materials and should be taken into account when evaluating a material's chemical formula. Especially it should be noted that the value g serves to maintain electroneutrality and depends on the proportions and the oxidation states of alkali and average oxidation states of transition metals, such that the combined positive charge of alkali and transition metal cations is balanced by the negative charge of the oxygen anions. When assigning the value of g the oxidation states are assumed to be +1 for Na and Li, +2 for Ni, +3 for Fe, +4 for Mn and Ti, and -2 for O. Since the oxidation state of the transition metals can vary, the g value can in reality be off by +/-10%.

An embodiment of the invention is compounds comprising the formula $Na_aLi_bNi_cMn_dFe_eTi_fO_g$ wherein $0.1 < e < 0.3$.

An embodiment of the invention is compounds comprising the formula $Na_aLi_bNi_cMn_dFe_eTi_fO_g$ wherein $0.05 < b < 0.2$.

An embodiment of the invention is compounds comprising the formula $Na_aLi_bNi_cMn_dFe_eTi_fO_g$ wherein the ratio of Mn:Fe is equal to or less than 15:1. For example, the ratio Mn:Fe may be 15:1; 5:1; 3:1; 2.0:1; 1.5:1; 1.4:1; 1.0:1 or 0.5:1.

An embodiment of the invention is compounds comprising the formula $Na_aLi_bNi_cMn_dFe_eTi_fO_g$; wherein, the nickel and manganese elements of compositions comprising the formula $Na_aLi_bNi_cMn_dTi_fO_g$ are substituted by iron in the amounts of: up to 50% of the nickel is substituted with iron and up to 10%, 20%, or 35% of the manganese is replaced with iron.

An embodiment of the invention is compounds comprising the formula $Na_{0.83}Li_{0.07}Ni_{0.155}Mn_{0.353}Fe_{0.255}Ti_{0.167}O_2$ or $Na_{0.78}Li_{0.13}Ni_{0.145}Mn_{0.33}Fe_{0.238}Ti_{0.156}O_{1.9}$.

A further embodiment of the invention is the process of electrochemical cycling of the sodium ion battery materials. The Na-batteries are charged with constant current until the upper voltage limit has been reached, followed by charge at constant voltage until the current has become less than half the current during constant current charge. The batteries are then discharged with constant current until the lower voltage limit has been reached, followed by discharge at constant voltage until the current has become less than half the current during constant current discharge. Hereby an improved capacity of the sodium ion battery materials is achieved.

All materials may be prepared by a solid state synthesis method as described in IOSR Journal of Applied Physics (IOSR-JAP) e-ISSN: 2278-4861.Volume 6, Issue 6 Ver. III (Nov.-Dec. 2014), PP 59-69 www.iosrjournals.org and http://www.academia.edu/13257250/Dielectric_and_magnetic_investigations_on_novel_P-2_type_layered_oxides.

An embodiment of the invention relates to a method for cycling a sodium ion battery according to the invention, wherein the sodium ion battery at least for every 10th cycle is subjected to a deep discharge where a voltage of the positive electrode at or below 2.5 V vs. $Na^+$/Na is reached while the specific current is less than or equal to 100 mA/g. Hereby, the stability of a sodium ion battery is increased. Preferably, the sodium ion battery is at least for every 10th cycle discharged to a voltage of about 2.0 V vs. Na+/Na the specific current of about 60 mA/g or below.

General Experimental Method:

The precursors and water are mixed using a ball-milling for 30 min at 600 rpm. Thereafter, the mixture is either dried at between 80-150°C or calcined directly. The dry material is ground in a mortar and transferred to high temperature crucibles and calcined between 700-950°C for 12 h.

The precursors are selected from the group consisting of LiOH, $Li_2CO_3$, NaOH, $Na_2CO_3$, $TiO_2$, MnO, $MnCO_3$, $Mn_3O_4$, $Mn_2O_3$, $MnO_2$, $Fe_3O_4$, $Fe_2O_3$, FeOOH, $NiCO_3$, $Ni(OH)_2$, and $xNiCO_3 \cdot yNi(OH)_2$ (any crystal water is excluded in these formulas). Other precursors such as nitrates, oxalates, acetates and mixed metal salts may also be used. The amount and type of the precursor depends on the formula of the material to be prepared.

Temperature variations in the calcination step affect the phase/structure to be formed. An increase in temperature results in the preference of 03 material formed rather than P2.

Examples

All materials in the Examples were prepared by a solid state synthesis method.

**1.1 Electrode preparation**

Coats were made using 80 wt% active cathode material, 10 wt% carbon (Super C65), and 10 wt% PVDF binder (Sigma Aldrich, 1:2 mix of MW180.000 and MW455.000) mixed by ball-milling for 10 min at 600 rpm. The coat was cast with a 100 $\mu$m bar and dried at 120°C for approximately 2 h. Electrodes with a diameter of 14 mm were cut and each pressed at 3 t. Then they were dried under vacuum at 120°C for 10 h. To avoid moisture effects, the electrodes were prepared within a few hours after calcination of the active material.

**1.2 Electrochemical tests**

Coin cells containing metallic Na as anode, electrolyte composed of 0.5-1 M $NaClO_4$ in propylene carbonate with fluoroethylene carbonate as additive, and glass filter paper separator in a half cell configuration were used for the electrochemical potential cycle tests. The tests were conducted at room temperature. Voltage intervals and charge currents were varied depending on the test. Each charge and discharge cycle included a constant current step and subsequently a constant voltage step that is cut off when the current has reached half of the current used in the constant current step. E.g. a discharge down to 2 V at a specific current of 120 $mAg^{-1}$ of a coin cell that contains 0.01 g active cathode material corresponds to discharging the battery using a constant current of 1.2 mA (0.01 g * 120 $mAg^{-1}$) until a voltage of 2 V is reached and then maintaining the voltage of 2 V until a current of 0.6 mA is reached (1.2 mA * 0.5).

Full cell test used hard carbon anodes (89 wt% hard carbon, 2 wt% SuperC65, and 9 wt% Cellulose binder).

## 1.3 Characterization tests

All samples were characterized by XRD within a few hours after calcination to avoid changes caused by moisture. Rough Rietveld refinements were performed in order to address the following: Impurities in the samples, weight fractions of O3 and P2 phases, and lattice parameters. The lattice parameters of the a and c axes of the P2-type and 03-type structures or phases are provided.

Experimental Method (Preparation of Example 16):

In the following the experimental method used for preparing the material of Example 16 is described. This is just an example and should not be seen as limiting the invention. Similar experimental methods may be used for preparing the material of the other Examples.

The precursors $Na_2CO_3$ (6.956 g; Merck, water free), $Li_2CO_3$ (0.409 g), $NiCO_3$ (2.910 g), $Mn_3O_4$ (4.247 g), $Fe_2O_3$ (3.221 g; Sigma Aldrich, <5 micron, >99% pure), $TiO_2$ (2.105 g; DT51D from Cristal) and demineralized water (20 g) were mixed using a ball-milling (Retsch PM200) for 30 min at 600 rpm in a 125 ml jar with 11 pieces of 10 mm diameter $ZrO_2$ balls. Thereafter, the mixture was dried at a temperature between 100-150°C. The dry material was hand ground in a mortar and transferred (4 g) to high temperature beakers and calcined between 700-950°C for 12 h. The material was taken out from the furnace during cool down thereof, when the oven was about 100°C warm. The material was immediately used for electrodes to avoid material changes from reaction with moisture. The coating slurry was made with 0.8 g cathode material, 0.1 g carbon (Super C65), and 0.1 g PVDF binder dissolved in NMP (1/3 Sigma Aldrich MW 180.000 PVDF and 2/3 Sigma Aldrich MW 455.000) mixed by ball-milling for 10 min at 600 rpm in 12.5 ml jar with two 10 mm steel balls. The slurry was coated on aluminum foil using a bar with a 100 micrometer gap. The coat was dried at 80°C for 2 h. Circular electrodes were cut with 14 mm diameter and pressed with 29 kN. The electrodes were the dried under vacuum for 10 h at 120°C before they were used in Na coin cell batteries.

Examples 1-4: 03-type phase pure and 90%-P2-type sodium secondary Battery Materials.

Examples 1 - 4 were prepared following the method provided in the experimental method (preparation of Example 16). The amount and type of precursors are dependent on the formula of the material, as provided in Tables 1a and 1b.

Table 1a:

| Ex | Formula | P2 (wt%) | 03 (wt%) | Capacity* $(mAhg^{-1})$ | Stability** |
|---|---|---|---|---|---|
| 1 | $Na_{0.83}Ni_{0.33}Mn_{0.50}Ti_{0.17}O_{2.1}$ | 90 | 10 | 140 | >95% |
| 2 | $Na_{0.83}Li_{0.07}Ni_{0.31}Mn_{0.45}Ti_{0.17}O_2$ | 34 | 66 | -- | -- |
| 3 | $Na_{0.83}Li_{0.07}Ni_{0.31}Mn_{0.45}Ti_{0.17}O_2$ | 0 | 100 | 190 | >95% |
| 4 | $Na_{0.83}Li_{0.14}Ni_{0.29}Mn_{0.41}Ti_{0.17}O_{1.9}$ | 0 | 100 | 190 | <80% |
| * The capacity is determined at 12 mAg-1 following the rate test. **A stability of x% means that x% of the capacity is maintained after 100 charge discharge cycles. | | | | | |

It should be noted that the material of example 1 is not part of the invention and that it is included for comparison only.

Table 1b:

| Ex | Formula | P2* | a (Å) | c (Å) | O3* | a (Å) | c (Å) |
|---|---|---|---|---|---|---|---|
| 1 | $Na_{0.83}Ni_{0.33}Mn_{0.50}Ti_{0.17}O_{2.1}$ | 90 | 2.903 | 11.116 | 10 | 2.933 | 16.416 |
| 2 | $Na_{0.83}Li_{0.07}Ni_{0.31}Mn_{0.45}Ti_{0.17}O_2$ | 34 | 2.904 | 11.06 | 66 | 2.939 | 16.334 |
| 3 | $Na_{0.83}Li_{0.07}Ni_{0.31}Mn_{0.45}Ti_{0.17}O_2$ | 0 | -- | -- | 100 | 2.934 | 16.320 |

(continued)

| Ex | Formula | P2* | a (Å) | c (Å) | O3* | a (Å) | c (Å) |
|---|---|---|---|---|---|---|---|
| 4 | $Na_{0.83}Li_{0.14}Ni_{0.29}Mn_{0.41}Ti_{0.17}O_{1.9}$ | 0 | -- | -- | 100 | 2.987 | 16.069 |

P2 is the content of P2-type phase in wt%.
03 is the content of 03-type phase in wt%.
'a' and 'c' are lattice parameters measured by powder X-ray diffraction.

Examples 1 and 3 show exceptional stability of at least 95% retention of capacity; in particular Example 3 where the material is phase pure 03-type.

It should be noted that varying the amount of lithium present in the composition varies the stability of the material.

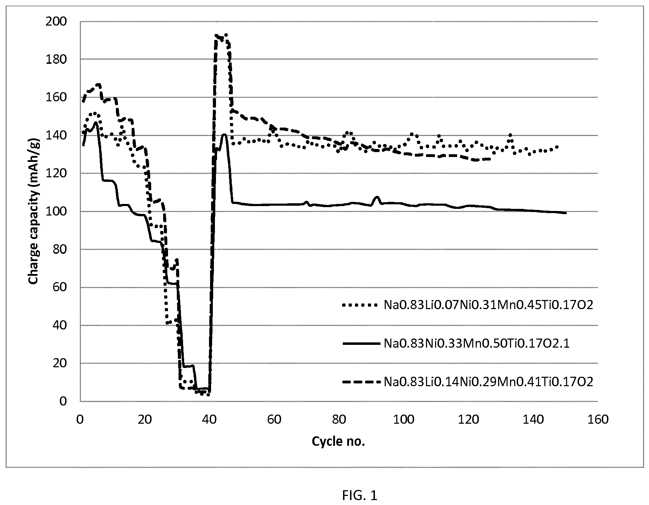

Fig. 1 shows rate capability and cycle life test from 2.0-4.3 V in a Na battery for Examples 1, 3 and 4. Rate capability test includes 5 cycles at each step of the rates 12, 60, 120, 600, 2400, 3600, 12 mAg$^{-1}$. The cycle life (stability) test is carried out at 120 mAg$^{-1}$. All examples display high capacity. Examples 1 and 3 show exceptional stability of at least 95% retention of capacity; in particular Example 3 where the structure is phase pure 03-type. Thus, it is seen that the substitution of some Ni and Mn with Li does not influence the very high stability, and that the substitution provides for a higher capacity of the material of example 3 compared with the material of example 1.

In fig. 1, the following legend is used:

Dotted line = Ex 3
Solid Line = Ex 1
Dashed Line = Ex 4

Examples 5 - 13: Partial Substitution of Ni with Fe of $Na_{0.83}Li_{0.07}Ni_{0.31}Mn_{0.45}Ti_{0.17}O_2$ and variation of the weight percent of P2-type and 03-type phases of the material.

The experimental method to prepare $Na_{0.83}Li_{0.07}Ni_{0.155}Mn_{0.353}Fe_{0.255}Ti_{0.17}O_2$ (Example 16) was followed; however, the amount and type of the precursors were adjusted to correspond to the final formula of the materials, as shown in Tables 2a and 2b.

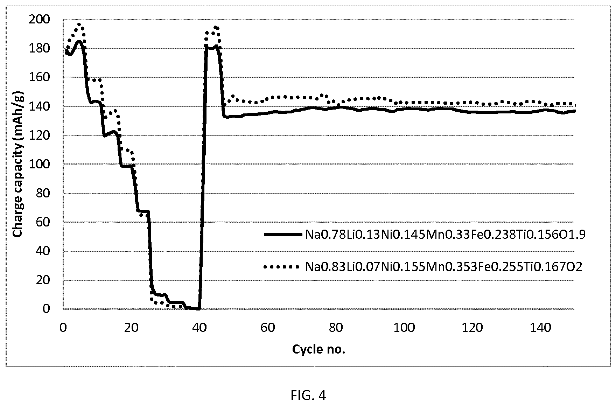

Furthermore, Examples 7 - 11, where 50% of the Ni of the formula of Example 3 is replaced with Fe, was subjected to calcination at different temperatures. Calcination of the material at a higher temperature results is a larger content of the 03-type phase resulting in a higher low-rate (e.g. 0.1 C rate) capacity. Calcination of the material at a lower temperature results is a larger content of the P2-type phase resulting in a higher high-rate (e.g. 5 C rate) capacity. Fig. 4 also illustrates this correlation.

Tables 2a and 2b: Partial Substitution of Ni with Fe of $Na_{0.83}Li_{0.07}Ni_{0.3},Mn_{0.45}Ti_{0.17}O_2$ and variation of the weight percent of P2-type and 03-type phases.

Table 2a:

| Ex | Formula | Cal. Temp | P2 (wt%) | O3 (wt%) |
|---|---|---|---|---|
| 5 | $Na_{0.83}Li_{0.07}Ni_{0.28}Fe_{0.03}Mn_{0.45}Ti_{0.17}O_2$ | 900 | 14 | 86 |
| 6 | $Na_{0.83}Li_{0.07}Ni_{0.217}Fe_{0.093}Mn_{0.453}Ti_{0.17}O_{2.1}$ | 900 | -- | 100 |
| 7 | $Na_{0.83}Li_{0.07}Ni_{0.16}Fe_{0.16}Mn_{0.45}Ti_{0.17}O_{2.1}$ | 900 | -- | 100 |
| 8 | $Na_{0.83}Li_{0.07}Ni_{0.16}Fe_{0.16}Mn_{0.45}Ti_{0.17}O_{2.1}$ | 950 | -- | 100 |
| 9 | $Na_{0.83}Li_{0.07}Ni_{0.16}Fe_{0.16}Mn_{0.45}Ti_{0.17}O_{2.1}$ | 850 | 19 | 81 |
| 10 | $Na_{0.83}Li_{0.07}Ni_{0.16}Fe_{0.16}Mn_{0.45}Ti_{0.17}O_{2.1}$ | 800 | 22 | 78 |
| 11 | $Na_{0.83}Li_{0.07}Ni_{0.16}Fe_{0.16}Mn_{0.45}Ti_{0.17}O_{2.1}$ | 750 | 22 | 78 |
| 12 | $Na_{0.83}Li_{0.07}Fe_{0.31}Mn_{0.45}Ti_{0.17}O_{2.2}$ | 900 | -- | 99 |
| 13 | $Na_{0.83}Li_{0.07}Fe_{0.31}Mn_{0.45}Ti_{0.17}O_{2.2}$ | 900 | -- | -- |

Table 2b:

| Ex | Formula | P2-type phase | | O3-type phase | |
|----|---------|---------------|---------------|---------------|---------------|
| | | a (Å) | c (Å) | a (Å) | c (Å) |
| 5 | $Na_{0.83}Li_{0.07}Ni_{0.28}Fe_{0.03}Mn_{0.45}Ti_{0.17}O_2$ | 2.905 | 11.055 | 2.941 | 16.313 |
| 6 | $Na_{0.83}Li_{0.07}Ni_{0.217}Fe_{0.093}Mn_{0.453}Ti_{0.17}O_{2.1}$ | -- | -- | 2.939 | 16.382 |
| 7 | $Na_{0.83}Li_{0.07}Ni_{0.16}Fe_{0.16}Mn_{0.45}Ti_{0.17}O_{2.1}$ | -- | -- | 2.945 | 16.403 |
| 8 | $Na_{0.83}Li_{0.07}Ni_{0.16}Fe_{0.16}Mn_{0.45}Ti_{0.17}O_{2.1}$ | -- | -- | 2.943 | 16.450 |
| 9 | $Na_{0.83}Li_{0.07}Ni_{0.16}Fe_{0.16}Mn_{0.45}Ti_{0.17}O_{2.1}$ | 2.904 | 11.097 | 2.940 | 16.432 |
| 10 | $Na_{0.83}Li_{0.07}Ni_{0.16}Fe_{0.16}Mn_{0.45}Ti_{0.17}O_{2.1}$ | 2.904 | 11.090 | 2.947 | 16.399 |
| 11 | $Na_{0.83}Li_{0.07}Ni_{0.16}Fe_{0.16}Mn_{0.45}Ti_{0.17}O_{2.1}$ | 2.901 | 11.086 | 2.956 | 16.365 |
| 12 | $Na_{0.83}Li_{0.07}Fe_{0.31}Mn_{0.45}Ti_{0.17}O_{2.2}$ | -- | -- | 2.956 | 16.516 |
| 13 | $Na_{0.83}Li_{0.07}Fe_{0.31}Mn_{0.45}Ti_{0.17}O_{2.2}$ | -- | -- | -- | -- |
| 'Cal. Temp' means calcination temperature in °C. 'a' and 'c' are lattice parameters measure by powder X-ray diffraction. | | | | | |

Examples 5 - 13 illustrate that substitution of a small proportion of Mn with Fe in $Na_{0.83}Li_{0.07}Ni_{0.31}Mn_{0.45}Ti_{0.17}O_2$ significantly promotes formation of the 03 phase (e.g. Ex 5: Fe = 0.03 lead to 86 wt% 03). Lowering the calcination temperature of the process of preparing the material to 750°C resulted in a material with 78 wt % of the 03 structure (Examples 10 and 11).

Figure 2 shows the second cycle of $Na_{0.83}Li_{0.07}Ni_{0.31}Mn_{0.45}Ti_{0.17}O_2$ where 10, 30, and 50% of the Ni was substituted with Fe. Discharge curves for Examples 5, 6 and 7 show a considerably different shape between 2.0 - 2.8 V; this is an indication of a difference between the intercalation energies of the materials comprising varying Fe content.

In fig. 2, the following legend is used:

Dash dotted black line = Ex 5
Dashed black line = Ex 6
Solid black line = Ex 7

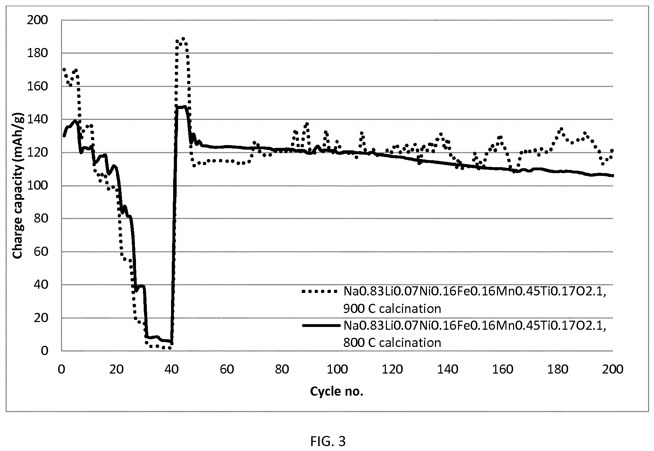

Additionally, Examples 5 - 13 illustrate that a small change in the 03/P2-ratio (in weight percent of the material), as illustrated by Examples 7 and 10 in Fig. 3, has a large effect on the electrochemical performance (stability and capacity) of the material.

Fig. 3 shows the rate capability and cycle life test from 2.0-4.3 V in a Na battery of $Na_{0.83}Li_{0.07}Ni_{0.16}Mn_{0.45}Fe_{0.16}Ti_{0.17}O_2$ calcined at 800°C (Example 10; 22 wt% P2 and 78 wt% 03) and 900°C (Example 7; almost pure 03). The rate capability test includes 5 cycles at each step of the rates 12, 60, 120, 600, 2400, 3600 and 12 $mAg^{-1}$. The cycle life test is carried out at 120 $mAg^{-1}$.

In fig. 3, the following legend has been used:

Dotted Line/Spots = Ex 7
Solid Line = Ex 10

Examples 14 - 19: Partial Substitution of Ni and Mn with Fe for $Na_{0.83}Li_{0.07}Ni_{0.31}Mn_{0.45}Ti_{0.17}O_2$. Partial Substitution of Ni with Fe and Full Substitution of Mn with Fe for $Na_{0.83}Li_{0.07}Ni_{0.31}Mn_{0.45}Ti_{0.17}O_2$.

The method to prepare $Na_{0.83}Li_{0.07}Ni_{0.155}Mn_{0.353}Fe_{0.255}Ti_{0.17}O_2$ (Example 16) was followed; however, the amount and type of the precursors were adjusted to correspond to the final formula of the materials as shown in Tables 3a and b.

Tables 3a and 3b: Partial Substitution of Ni and Mn with Fe for Na$_{0.83}$Li$_{0.07}$Ni$_{0.31}$Mn$_{0.45}$Ti$_{0.17}$O$_2$. Partial Substitution of Ni with Fe and Full Substitution of Mn with Fe for Na$_{0.83}$Li$_{0.07}$Ni$_{0.31}$Mn$_{0.45}$Ti$_{0.17}$O$_2$.

| Ex | Formula | % Mn sub[a] | Mn:Fe | O3[b] | Capacity (mAhg$^{-1}$) |
|---|---|---|---|---|---|
| 14 | Na$_{0.83}$Li$_{0.07}$Ni$_{0.155}$ Mn$_{0.45}$Fe$_{0.155}$Ti$_{0.17}$O$_{2.1}$ | 0 | 2.9 | 100 | 180 |
| 15 | Na$_{0.83}$Li$_{0.07}$Ni$_{0.155}$Mn$_{0.403}$Fe$_{0.205}$Ti$_{0.17}$O$_{2.1}$ | 10 | 1.97 | 99 | 190 |
| 16 | Na$_{0.83}$Li$_{0.07}$Ni$_{0.155}$Mn$_{0.353}$Fe$_{0.255}$Ti$_{0.17}$O$_2$ | 20 | 1.38 | 100 | 200 |
| 17 | Na$_{0.83}$Li$_{0.07}$Ni$_{0.155}$Mn$_{0.303}$Fe$_{0.305}$Ti$_{0.17}$O$_2$ | 33 | 0.99 | 100 | 185 |
| 18 | Na$_{0.83}$Li$_{0.07}$Ni$_{0.155}$Mn$_{0.203}$Fe$_{0.405}$Ti$_{0.17}$O$_2$ | 55 | 0.50 | 100 | 145 |
| 19 | Na$_{0.83}$Li$_{0.07}$Ni$_{0.155}$Fe$_{0.608}$Ti$_{0.17}$O$_{1.9}$ | 100 | 0 | 100 | 85 |

| Ex | Formula | Temp[c] | O3[b] | a (Å) | c (Å) |
|---|---|---|---|---|---|
| 14 | Na$_{0.83}$Li$_{0.07}$Ni$_{0.155}$ Mn$_{0.45}$Fe$_{0.155}$Ti$_{0.17}$O$_{2.1}$ | 900 | 100 | 2.945 | 16.403 |
| 15 | Na$_{0.83}$Li$_{0.07}$Ni$_{0.155}$Mn$_{0.403}$Fe$_{0.205}$Ti$_{0.17}$O$_{2.1}$ | 900 | 99 | 2.947 | 16.397 |
| 16 | Na$_{0.83}$Li$_{0.07}$Ni$_{0.155}$Mn$_{0.353}$Fe$_{0.255}$Ti$_{0.17}$O$_2$ | 900 | 100 | 2.955 | 16.343 |
| 17 | Na$_{0.83}$Li$_{0.07}$Ni$_{0.155}$Mn$_{0.303}$Fe$_{0.305}$Ti$_{0.17}$O$_2$ | 900 | 100 | 2.960 | 16.331 |
| 18 | Na$_{0.83}$Li$_{0.07}$Ni$_{0.155}$Mn$_{0.203}$Fe$_{0.405}$Ti$_{0.17}$O$_2$ | 900 | 100 | 2.981 | 16.225 |
| 19 | Na$_{0.83}$Li$_{0.07}$Ni$_{0.155}$Fe$_{0.608}$Ti$_{0.17}$O$_{1.9}$ | 900 | 100 | 3.017 | 16.093 |

% Mn sub[a] means the percentage of manganese substituted with iron after 50% of the nickel has been substituted with iron.

O3[b] is the content of O3-type phase in weight percentage of the material.

Temp[c] means the temperature of calcination in ºC.

'a' and 'c' are lattice parameters measure by powder X-ray difraction.

Examples 14 - 19 illustrate the variation of lattice parameters for substitution of both Mn and Ni with Fe into the initial material of formula Na$_{0.83}$Li$_{0.07}$Ni$_{0.155}$Fe$_{0.155}$Mn$_{0.45}$Ti$_{0.17}$O$_{2.1}$. Examples 14 - 19 were almost all pure 03-type phase materials. Examples 14 - 19 illustrate that increasing the Fe:Mn ratio contracted the c-axis while expanding the a-axis.
Additionally, Examples 14 - 19 illustrate that good capacities were measured for samples with up to 20% of Mn substituted with Fe (in addition to 50% of Ni being substituted with Fe); substitutions are based on the initial formula of

$Na_{0.83}Li_{0.07}Ni_{0.31}Mn_{0.45}Ti_{0.17}O_2$ (the formula of Ex 2 and 3 prior to calcination). Increasing the amount of the Mn substituted with Fe, decreased capacities and full Mn substitution resulted in a very large first cycle loss.

Examples 20 - 21.

The experimental method to prepare $Na_{0.83}Li_{0.07}Ni_{0.155}Mn_{0.353}Fe_{0.255}Ti_{0.17}O_2$ (Example 16) was followed; however, the amount and type of the precursors were adjusted to correspond to the final formula of the materials, as shown in Table 4.

Table 4: Comparison of variations in formula due to experimental limitations for rate capability and cycle life testing.

| Ex | Formula | Temp (°C) | O3 (wt%) | a (Å) | c (Å) | Capacity (mAhg$^{-1}$) |
|---|---|---|---|---|---|---|
| 20 | $Na_{0.83}Li_{0.07}Ni_{0.155}MN_{0.353}Fe_{0.255}Ti_{0.167}O_2$ | 900 | 100 | 2.955 | 16.343 | 190 |
| 21 | $Na_{0.78}Li_{0.13}Ni_{0.145}Mn_{0.33}Fe_{0.238}Ti_{0.156}O_{1.9}$ | 900 | 100 | 2.955 | 16.343 | 180 |

Fig. 4 shows the rate capability and cycle life test from 2.0-4.3 V in a Na battery. The rate capability test includes 5 cycles at each step of the rates 12, 60, 120, 600, 2400, 3600 and 12 mAg$^{-1}$. The cycle life test is carried out at 120 mAg$^{-1}$. Examples 20 - 21 show exceptional stability, > 95% retention in capacity, and a high capacity, >130 mAhg$^{-1}$.

In fig. 4, the following legend has been used:

Dotted/Broken Line = Ex 20
Solid Line = Ex 21

**Claims**

1.  A sodium ion battery material comprising the formula $Na_aLi_bNi_c\text{-}Mn_dFe_eTi_fO_g$ wherein

    $0.70 < a < 1.0$
    $0.01 \leq b < 0.2$
    $0.10 < c < 0.37$
    $0.20 < d < 0.5$
    $0.00 \leq e < 0.3$
    $0.10 < f < 0.2$
    $1.85 \leq g \leq 2.2,$

    Wherein $\dfrac{c+d+e+f}{g} < 2$ and wherein the capacity of the material decreases by 20% or less after 100 cycles between from 2.0 and 4.3 V in a Na anode half-cell.

2.  A sodium ion battery material according to claim 1, wherein the specific capacity of the material is equal to or greater than 100 mAhg$^{-1}$.

3.  A sodium ion battery material according to claim 1 or 2, wherein the material comprises 85 % or more P2-type structure.

4.  A sodium ion battery material according to claim 1 or 2, wherein the material comprises 70 % or more 03-type structure.

5.  A sodium ion battery material according to claim 4, wherein $0.05 < b < 0.2$.

6.  A sodium ion battery material according to claim 5, comprising the formula $Na_{0.83}Li_{0.07}Ni_{0.31}Mn_{0.45}Ti_{0.17}O_2$ or $Na_{0.83}Li_{0.07}Ni_{0.29}Mn_{0.41}Ti_{0.17}O_{1.9}$.

7.  A sodium ion battery material according to any of the claims 1, 2, 4 and 5, wherein $0.10 < e < 0.3$.

8. A sodium ion battery material according to claim 7, wherein the ratio of Mn:Fe is equal to or less than 15:1.

9. A sodium ion battery material according to claim 8, comprising the formula $Na_{0.83}Li_{0.07}Ni_{0.155}Mn_{0.353}Fe_{0.255}Ti_{0.167}O_2$ or $Na_{0.78}Li_{0.13}Ni_{0.145}Mn_{0.33}Fe_{0.238}Ti_{0.156}O_{1.9}$.

10. A sodium ion battery material according to any of the claims 1 to 9, wherein the capacity of the material decreases by 5% or less after 100 cycles.

11. A process for preparation of a sodium ion battery material according to any of the claims 1 to 10, wherein the process is a synthesis method comprising:

    - Mixing precursors,
    - Calcining the mixture at a temperature between 700°C and 950°C.

12. A sodium ion battery comprising the sodium ion battery material according to any of the claims 1 to 11.

13. A method for cycling a sodium ion battery according to claim 12, wherein the sodium ion battery at least for every 10th charge/discharge cycle is subjected to a deep discharge where a voltage of the positive electrode at or below 2.5 V vs. $Na^+$/Na is reached while the specific current is less than or equal to 100 mA/g.

**Patentansprüche**

1. Natriumionenbatteriematerial, umfassend die Formel $Na_aLi_bNi_c\text{-}Mn_dFe_eTi_fO_g$, wobei

    $0,70 < a < 1,0$
    $0,01 \leq b < 0,2$
    $0,10 < c < 0,37$
    $0,20 < d < 0,5$
    $0,00 \leq e < 0,3$
    $0,10 < f < 0,2$
    $1,85 \leq g \leq 2,2,$

    $$\frac{c+d+e+f}{g} < 2$$

    wobei und wobei die Kapazität des Materials nach 100 Zyklen zwischen 2,0 und 4,3 V in einer Na-Anode-Halbzelle um 20% oder weniger abnimmt.

2. Natriumionenbatteriematerial gemäß Anspruch 1, wobei die spezifische Kapazität des Materials gleich oder größer als 100 mAhg$^{-1}$ ist.

3. Natriumionenbatteriematerial gemäß Anspruch 1 oder 2, wobei das Material 85% oder mehr einer Struktur vom P2-Typ umfasst.

4. Natriumionenbatteriematerial gemäß Anspruch 1 oder 2, wobei das Material 70% oder mehr einer Struktur vom O3-Typ umfasst.

5. Natriumionenbatteriematerial gemäß Anspruch 4, wobei $0,05 < b < 0,2$.

6. Natriumionenbatteriematerial gemäß Anspruch 5, umfassend die Formel $Na_{0,83}Li_{0,07}Ni_{0,31}Mn_{0,45}Ti_{0,17}O_2$ oder $Na_{0,83}Li_{0,07}Ni_{0,29}Mn_{0,41}Ti_{0,17}O_{1,9}$.

7. Natriumionenbatteriematerial gemäß einem der Ansprüche 1, 2, 4 und 5, wobei $0,10 < e < 0,3$.

8. Natriumionenbatteriematerial gemäß Anspruch 7, wobei das Verhältnis von Mn:Fe gleich oder kleiner als 15:1 ist.

9. Natriumionenbatteriematerial gemäß Anspruch 8, umfassend die Formel $Na_{0,83}Li_{0,07}Ni_{0,155}Mn_{0,353}Fe_{0,255}Ti_{0,167}O_2$

oder

$Na_{0,78}Li_{0,13}Ni_{0,145}Mn_{0,33}Fe_{0,238}Ti_{0,156}O_{1,9}$.

10. Natriumionenbatteriematerial gemäß einem der Ansprüche 1 bis 9, wobei die Kapazität des Materials nach 100 Zyklen um 5% oder weniger abnimmt.

11. Verfahren zur Herstellung eines Natriumionenbatteriematerials gemäß einem der Ansprüche 1 bis 10, wobei das Verfahren ein Syntheseverfahren ist, umfassend:

   - Vermischen von Vorläufern,
   - Kalzinieren der Mischung bei einer Temperatur zwischen 700°C und 950°C.

12. Natriumionenbatterie, umfassend das Natriumionenbatteriematerial gemäß einem der Ansprüche 1 bis 11.

13. Verfahren zum Zyklisieren einer Natriumionenbatterie gemäß Anspruch 12, wobei die Natriumionenbatterie mindestens bei jedem 10. Lade-/Entladezyklus einer Tiefentladung unterzogen wird, bei der eine Spannung der positiven Elektrode bei oder unter 2,5 V relativ zu $Na^+/Na$ erreicht wird während der spezifische Strom kleiner oder gleich 100 mA/g ist.

**Revendications**

1. Matériau pour batterie sodium-ion comprenant la formule $Na_aLi_bNi_c\text{-}Mn_dFe_eTi_fO_g$, dans lequel

   $0,70 < a < 1,0$
   $0,01 \leq b < 0,2$
   $0,10 < c < 0,37$
   $0,20 < d < 0,5$
   $0,00 \leq e < 0,3$
   $0,10 < f < 0,2$
   $1,85 \leq g \leq 2,2$,

   dans lequel $\dfrac{c+d+e+f}{g} < 2$ et dans lequel la capacité du matériau diminue de 20 % ou moins au bout de 100 cycles entre 2,0 et 4,3 V dans une demi-cellule d'anode Na.

2. Matériau pour batterie sodium-ion selon la revendication 1, dans lequel la capacité spécifique du matériau est égale ou supérieure à 100 mAhg$^{-1}$.

3. Matériau pour batterie sodium-ion selon la revendication 1 ou 2, dans lequel le matériau comprend 85 % ou plus d'une structure de type P2.

4. Matériau pour batterie sodium-ion selon la revendication 1 ou 2, dans lequel le matériau comprend 70 % ou plus d'une structure de type 03.

5. Matériau pour batterie sodium-ion selon la revendication 4, dans lequel $0,05 < b < 0,2$.

6. Matériau pour batterie sodium-ion selon la revendication 5, comprenant la formule $Na_{0,83}Li_{0,07}Ni_{0,31}Mn_{0,45}Ti_{0,17}O_2$ ou $Na_{0,83}Li_{0,07}Ni_{0,29}Mn_{0,41}Ti_{0,17}O_{1,9}$.

7. Matériau pour batterie sodium-ion selon l'une quelconque des revendications 1, 2, 4 et 5, dans lequel $0,10 < e < 0,3$.

8. Matériau pour batterie sodium-ion selon la revendication 7, dans lequel le rapport de Mn/Fe est égal ou inférieur à 15/1.

9. Matériau pour batterie sodium-ion selon la revendication 8, comprenant la formule $Na_{0,83}Li_{0,07}Ni_{0,155}Mn_{0,353}Fe_{0,255}Ti_{0,167}O_2$ ou $Na_{0,78}Li_{0,13}Ni_{0,145}Mn_{0,33}Fe_{0,238}Ti_{0,156}O_{1,9}$.

10. Matériau pour batterie sodium-ion selon l'une quelconque des revendications 1 à 9, dans lequel la capacité du matériau diminue de 5 % ou moins au bout de 100 cycles.

11. Processus pour la préparation d'un matériau pour batterie sodium-ion selon l'une quelconque des revendications 1 à 10, dans lequel le processus est un procédé de synthèse comprenant:

   - le mélange de précurseurs,
   - la calcination du mélange à une température comprise entre 700°C et 950°C.

12. Batterie sodium-ion comprenant le matériau pour batterie sodium-ion selon l'une quelconque des revendications 1 à 11.

13. Procédé destiné à soumettre à des cycles une batterie sodium-ion selon la revendication 12, dans lequel la batterie sodium-ion au moins pour un cycle de recharge/décharge sur 10 est soumise à une décharge totale où une tension de l'électrode positive à ou inférieure à 2,5 V par rapport à $Na^+/Na$ est atteinte tandis que le courant spécifique est inférieur ou égal à 100 mA/g.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Chem. Rev.,* 2014, vol. 114, 11636-11682
- *Chem. Mater.,* 2014, vol. 26, 1260-1269
- *J. Power Sources,* 2014, vol. 264, 235-239
- *Chem. Comm.,* 2014, vol. 50, 3677-3680
- *Nano Lett,* 2014, vol. 14, 1620-1626
- *Chem. Mater.,* 2014, vol. 26, 6165-6171
- *Adv. Energy Mater.,* 2014, vol. 4, 1400458
- *IOSR Journal of Applied Physics (IOSR-JAP),* November 2014, vol. 6 (6), ISSN 2278-4861, 59-69, www.iosrjournals.org